# EUROPEAN PATENT APPLICATION

(11) **EP 2 899 175 A1**
(43) Date of publication of application: **29.07.2015**
(21) Application number: 14461593.7
(22) Date of filing: 27.11.2014
(51) Int. Cl.: C04B 35/528, C04B 35/532, C04B 38/00

(54) **THE METHOD OF PREPARATION OF NANOPOROUS CARBON MATERIALS**

(30) Priority: 24.01.2014 PL 40691914
(71) Applicant: Zachodniopomorski Uniwersytet Technologiczny w Szczecinie, 70-310 Szczecin (PL)
(72) Inventor: Michalkiewicz, Beata, 71-244 Szczecin (PL); Majewska, Justyna, 71-427 Szczecin (PL); Mlodzik, Jacek, 78-540 Kalisz Pomorski (PL); Michalkiewicz, Kamila, 71-083 Szczecin (PL)
(74) Representative: Zawadzka, Renata

(57) **Abstract**

The subject of the present invention is a method of preparation of nanoporous carbon materials via mixing a carbon material with silica used as a matrix, drying the obtained material and its calcination. The present invention is characterised in that molasses in the mass ratio to silica in the range from 0.2 to 2 is used as the source of carbon. The essential feature of the present method is that cane or beet molasses is used. Advantageous effects are obtained by conducting calcination at the temperature range of 300-1200°C. After calcination, the silica matrix is removed using 35% by mass hydrofluoric acid. Then, the material is washed with water until neutral reaction is obtained and the material is later dried.

## Description

The purpose of the present invention is to describe a method of preparation of nanoporous carbon materials using silica as the matrix.

Porous carbon materials have found many applications, including gas separation, treatment of water, as catalyst carriers, as electrodes in batteries and fuel cells. Activated carbons, which are usually synthesized using chemical or physical activation, are microporous materials (with a pore size smaller than 2 nm), which makes them useless in the adsorption of compounds with large molecules. Therefore carbons, used as sorbents for removal of large molecules contaminating water or for production of electrodes in double-layer capacitors, should be mesoporous materials (T. Kyotani, Carbon, 2000, 38, 269).

Several methods of synthesizing mesoporous or macroporous carbons have been developed, with matrix-based synthesis being the most commonly used method in recent years. The method is conducted in the following steps: fabrication of a composite consisting of a carbon precursor and a matrix. Composite carbonization is followed by matrix removal. If matrix pores were filled with carbon at the initial stage, reverse replica carbon materials are obtained as products.

Matrices can be introduced into a carbon precursor as microballs, microrods or in other shapes. An obtained carbon product will be characterized with pore systems of the same size as the matrices.

The first synthesis using SiO₂ molecules as the matrix was conducted by Zakidov et al. (Science, 1998, 282, 897). The authors used colloidal silica crystals as ball-shaped matrices and phenolic resin as carbon precursor. The composite was carbonized and silica matrices were removed using HF, obtaining mesoporous carbon with a high specific surface area and large mesopore volume.

Several materials can be used as a matrix, including SiO₂ geles, zeolites, mesoporous silica and recently also SiO₂ balls with a diameter of several nanometers, synthesized in hydrolysis and condensation of tetraethyl orthosilicate (S.B.Yoon et al., J Mater Chem 2007, 17, 1758).

Porous carbons were obtained in polymerization of resorcinol and formaldehyde in the presence of Ludox HS-40 silica sol (S. Han, T. Hyeon, Carbon, 1999, 37, 1645, S. Han, et al., Chem. Mater., 2000, 12, 3337). Mesophase pitch and poliacrylonitrile combined with a sol (Z. Li, M. Jaroniec, J. Am. Chem. Soc., 2001, 123, 9208) and silica gel were also used as carbon precursors (Z. Li, M. Jaroniec, Carbon, 2001, 39, 2080).

The literature provides a synthesis method of mesoporous carbon foams using resorcinol - formaldehyde gels as a carbon precursor and polystyrene microballs (W. W. Lukens, G. D. Stucky, Chem. Mater., 2002, 14, 1665) or polydivinylbenzene and colloidal silica with modified surface (J. Jang, B. Lim, Adv. Mater., 2002, 14, 1390).

Kyotani et al. synthesized mesoporous carbons following copolymerization of furfuryl alcohol and tetraethyl orthosilicate (D. Kawashima et al., Chem. Mater., 2000, 12, 3397). Mayani et al. developed a method of mesoporous carbon synthesis using the pitch obtained in pyrolytic oil extraction with methanol and SiO₂ microballs (S.V. Mayani et al., Materials Letters 2012, 82, 120).

The literature also contains reports about other substrates used as carbon sources: sucrose (A. Monnier et al. Science, 1993, 261, 1299, P.T. Tanev et al. Science, 1995, 267, 865), glucose, xylose (J.Choma et al., Ochrona Srodowiska, 2008, 30, 3), the product of polymerization of phenol and hexammine (J.H. Knox et al. J. Chromatogr., 1986, 352, 3), polyvinyl chloride (A. B. Fuertes, S. Alvarez, Carbon, 2004, 42, 3049), acenaphthene (T. - W. Kim et al., Angew. Chem. Ind. Ed., 2003, 42, 4375), benzene, naphthalene, anthracene, and pyrene (C. H. Kim et al., Langmuir, 2004, 20, 5157). Carbon can also be obtained following a chemical decomposition of vapors of the following substances: propylene (C. Vix - Guterl et al., Chem. Lett., 2002, 1062), acetylene (M. Kanneda et al., J. Phys. Chem. B, 2002, 106, 1256), ethylene (W. - H. Zhang et al., Adv. Mater., 2002, 14, 1776), styrene (Y. D. Xia, R. Mokaya, Adv. Mater., 2004, 16, 886; Y. D. Xia, R. Mokaya, Adv. Mater., 2004, 16, 1553), furfuryl alcohol (A. B. Fuertes, D. M. Nevskaia, J. Mater. Chem., 2003, 13, 1843) and acetonitrile (Y. D. Xia, R. Mokaya, Adv. Mater., 2004, 16, 1553).

Unexpectedly, molasses, a by-product of the sugar refining industry, turned out to be a carbon precursor in the synthesis of nanoporous carbons.

The subject of the present invention is a method of preparation of nanoporous carbon materials via mixing a carbon material with silica used as a matrix, drying the obtained material and its calcination. The present invention is characterised in that molasses in the mass ratio to silica in the range from 0.2 to 2 is used as the source of carbon. The essential feature of the present method is that cane or beet molasses is used. Advantageous effects are obtained by conducting calcination at the temperature range of 300-1200°C. After calcination, the silica matrix is removed using 35% by mass hydrofluoric acid. Then, the material is washed with water until neutral reaction is obtained and the material is later dried.

The essential advantage of the present invention is using in the method the molasses which is scrap material from sugar industry.

The essential feature of the invention is presented in the below synthesis examples.

### Example 1

Silica in the form of particles with the diameter of 7 nm (Aerosil 300) was used as the matrix. Beet molasses was used as the source of carbon. The substrates, SiO₂:molasses, were mixed in the weight ratio of 1:2, dried in air atmosphere at 80°C for 2 h and then at 160°C for 24 h. The dry powder underwent calcination in nitrogen atmosphere at 750°C. The silica matrix was removed as a result of using 35% HF. The material obtained in this way was washed with water until neutral reaction was obtained and the material was later dried. SEM and XRD analysis confirmed that a porous carbon material was obtained. The specific surface area, determined with the multi-point BET method, was 620 m²/g.

### Example 2

Silica in the form of particles with the diameter of 14 nm (Aerosil 150) was used as the matrix. Beet molasses was used as the source of carbon. The substrates, SiO₂:molasses, were mixed in the weight ratio of 1:0.2, dried in air atmosphere at 80°C for 2 h and then at 160°C for 24 h. The dry powder underwent calcination in nitrogen atmosphere at 1200°C. The silica matrix was removed as a result of using 35% HF. The material obtained in this way was washed with water until neutral reaction was obtained and the material was later later dried. SEM and XRD analysis confirmed that a porous carbon material was obtained. The specific surface area, determined with the multi-point BET method, was 250 m²/g.

### Example 3

Silica in the form of microballs with the diameter of 400 nm obtained with the commonly known method (Nanoscale. 2011, 3(4),1632) was used as the matrix. Beet molasses was used as the source of carbon. The substrates, SiO₂:molasses, were mixed in the weight ratio of 1:1.6, dried in air atmosphere at 80°C for 2 h and then at 160°C for 24 h. The dry powder underwent calcination in nitrogen atmosphere at 750°C. The silica matrix was removed as a result of using 35% HF. The material obtained in this way was washed with water until neutral reaction was obtained and the material was later dried. SEM and XRD analysis confirmed that a porous carbon material was obtained. The specific surface area, determined with the multi-point BET method, was 1058 m²/g.

### Example 4

The procedure was the same as that used in Example 3, except for the fact that calcination was conducted at 1000°C. SEM and XRD analysis confirmed that a porous carbon material was obtained. The specific surface area, determined with the multi-point BET method, was 189 m²/g.

### Example 5

The procedure was the same as that used in Example 1, except for the fact that the substrates, SiO₂:molasses, were mixed in the weight ratio of 1:0.7 and calcination was conducted at 300°C. SEM and XRD analysis confirmed that a porous carbon material was obtained. The specific surface area, determined with the multi-point BET method, was 190 m²/g.

### Example 6

The procedure was the same as that used in Example 2 except for the fact that the substrates, SiO₂:molasses, were mixed in the weight ratio of 1:1.2 and calcination was conducted at 700°C. SEM and XRD analysis confirmed that a porous carbon material was obtained. The specific surface area, determined with the multi-point BET method, was 590 m²/g.

## Claims

1. A method of preparation of nanoporous carbon materials, where a carbon material is mixed with silica used as the matrix, dried and undergoes calcination, **characterised in that** as the source of carbon is used molasses in the mass ratio to silica in the range from 0.2 to 2.

2. The method according to claim 1, **characterised in that** cane or beet molasses are used.

3. The method according to claim 1, **characterised in that** calcination is conducted at the temperature range of 300-1200°C.

4. The method according to claim 1, **characterised in that** after calcination, the silica matrix is removed using 35% by mass hydrofluoric acid, and then the material is washed with water until neutral reaction is obtained and the material is dried.
